# EUROPEAN PATENT APPLICATION

(11) **EP 1 615 429 A2**
(43) Date of publication of application: **11.01.2006**
(21) Application number: 05014556.4
(22) Date of filing: 05.07.2005
(51) Int. Cl.: H04N 5/445

(54) **Universal remote controller, and control method therefor**

(30) Priority: 09.07.2004 CN 200410062370
(71) Applicant: Ting, Yi-Liang, Neihu District Taipei City 114 (TW)
(72) Inventor: Ting, Yi-Liang, Neihu District Taipei City 114 (TW)
(74) Representative: Viering, Jentschura & Partner

(57) **Abstract**

A method of controlling a remote-controlled electronic device using a universal remote controller includes the following steps. The first step is to provide a universal remote controller. The second step is to establish a communication link between the universal remote controller and a first electronic device, such that the universal remote controller is able to obtain a playback list from the first electronic device through the communication link, wherein the playback list includes at least one broadcasting entry. The third step is that the universal remote controller classifies the playback list based on attributes of individual broadcasting entries. The fifth step is that the universal remote controller receives execution commands from an input device based on the classified playback list, and the universal remote controller transmitting wireless signal commands corresponding to the execution commands to a second electronic device based on the execution commands.

## Description

### FIELD OF THE INVENTION

This invention relates to a method of controlling a remote-controlled electronic device and remote controller thereof, particularly to a method of controlling a remote-controlled electronic device and remote controller thereof that is able to update, classify and organize information, such as TV program broadcasting schedule, at any time, to provide users with sufficient information for remotely controlling entries to be remotely controlled.

### BACKGROUND OF THE INVENTION

Conventional remote controllers for use with home appliances are mostly categorized into two categories. The first is the so-called independent remote controllers that are only capable of controlling a designated home appliance for its remote control operation. Such a category of remote controller carries out all remote control functions by individual pushbuttons. The user remotely controls the home appliance through the selected pushbuttons. The second is the so-called multi-functional remote controllers, which are capable of remotely controlling more than one home appliance. Such remote controllers configure the remote control command codes of all home appliances within its interior electronic circuits. However, the interface provided by these two categories of conventional remote controllers is plural pushbuttons. That is, the conventional remote controllers are designed to replace the operations performed by pushing the pushbuttons provided on the home appliances. Thus, the conventional remote controllers are inherently incapable of providing the user with sufficient information, such as the programs title that is currently broadcasted by an X channel.

In view of the drawbacks of the conventional remote controllers, disclosed is a method of controlling remote-controlled electronic device and remote controller thereof that is able to update, classify and organize information, such as TV program broadcasting schedules, at any time, to provide users with sufficient information for remotely controlling entries to be remotely controlled.

### SUMMARY OF THE INVENTION

It is a first object of this invention to provide a method of controlling a remote-controlled electronic device, where entries to be remotely controlled may be updated at any time using the universal remote controller of this invention, such as the most updated TV program broadcasting schedule, given sufficient information, so as to allow the user to remotely control the electronic device.

It is another object of this invention to provide a universal remote controller, capable of downloading entries to be remotely controlled at any time, such as the most updated TV program broadcasting schedule, and then classifying and organizing the information, to allow the user to remotely control the electronic device in an easy manner.

To achieve the above objects this invention provides a method of controlling a remote-controlled electronic device using a universal remote controller, comprising the steps of: providing a universal remote controller; establishing a communication link between the universal remote controller and a first electronic device, such that the universal remote controller is able to obtain a playback list from the first electronic device through the communication link, wherein the playback list includes at least one broadcasting entry; the universal remote controller classifying the playback list based on attributes of individual broadcasting entries; the universal remote controller receiving execution commands from an input device based on the classified playback list, and the universal remote controller transmitting wireless signal commands corresponding to the execution commands to a second electronic device based on the execution commands.

This invention further discloses a universal remote controller based on the spirit of the above method of controlling.

### BRIEF DESCRIPTION OF THE DRAWINGS

These and other modifications and advantages will become even more apparent from the following detained description of a preferred embodiment of the invention and from the drawings in which:
Fig. 1 is a flowchart illustrating a method of this invention;
Fig. 2 is a schematic drawing illustrating a universal remote controller of this invention;
Fig. 3 is a schematic drawing illustrating a playback list obtained from a first electronic device according to this invention;
Fig. 4 is a diagram illustrating the information structure of the TV program broadcasting schedule of the playback list obtained from the first electronic device;
Fig. 5 is a diagram illustrating the information structure of the MP3 soundtrack summary table of the playback list obtained from the first electronic device;
Fig. 6 is a schematic drawing illustrating the appearance of the universal remote controller of this invention; and
Fig. 7 is diagram illustrating the information structure of the command concordance table for use with a second electronic device.

### DETAILED DESCRIPTION OF THE INVENTION

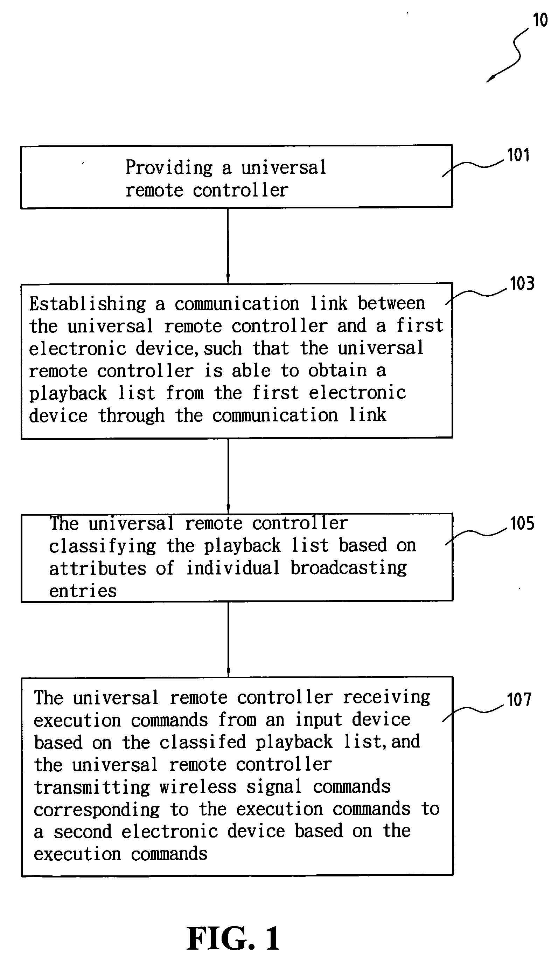

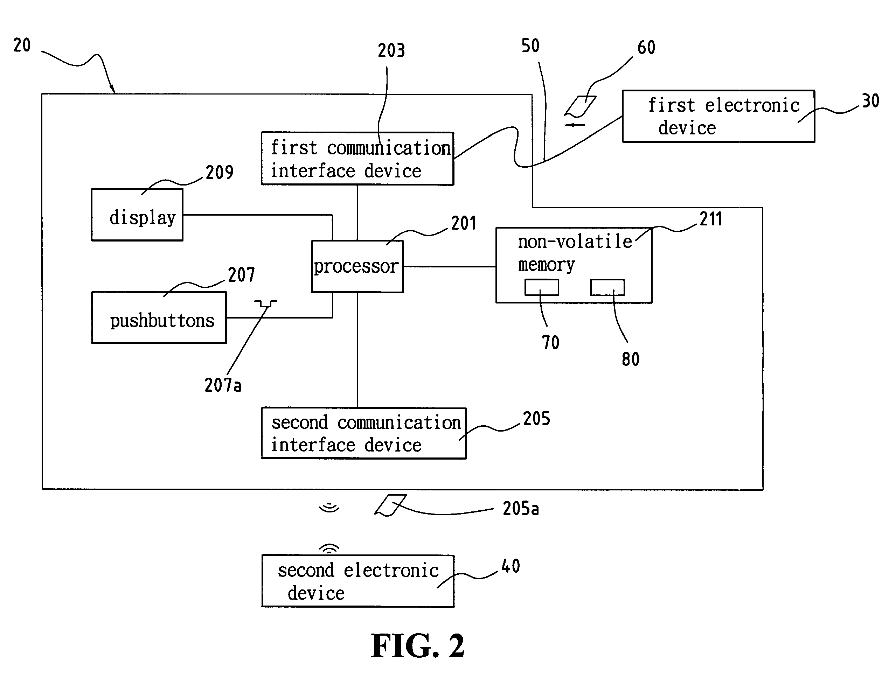

Fig. 1 is a flowchart illustrating a method of this invention and Fig. 2 is a schematic drawing illustrating a universal remote controller of this invention. According to this invention, the method of controlling a remote-controlled electronic device using a universal remote controller 10 comprises the following steps described in detail as follows. Step (101) provides a universal remote controller 20, details of the universal remote controller 20 will be described later. Step (103) establishes a communication link 50 between the universal remote controller 20 and a first electronic device 30, such that the universal remote controller 20 is able to obtain a playback list 60 from the first electronic device 30 through the communication link 50, wherein the playback list 60 includes at least one broadcasting entry 601. In Step (103), the actual implementation of the communication link 50 may include a wired communication link, a wireless communication link, WAN or LAN, where a corresponding electronic circuit is implemented to the universal remote controller 20 based on the measure of the communication link 50 as selected. For example, the communication link 50 may be a USB interface that connects the universal remote controller 20 to the first electronic device 30 through a USB cable. The electronic device 30 provides a playback list 60 to be downloaded by the universal remote controller 20 through the communication link 50.

In Step (105), the universal remote controller 20 classifies the playback list 60 based on attributes of individual broadcasting entries 601. The playback list 60 obtained in Step (103) may be inclusive of everything. For example, the playback list 60 may be the TV program broadcasting schedule provided by a cable service provider, a Karaoke soundtrack summary table to be used in a Karaoke player, an MP3 soundtrack summary table of all CD/MP3 soundtracks stored in a computer, file names of individual CD/MP3 soundtracks, a DVD movie title summary table of all DVD movie titles stored in a computer, file names of individual DVD movie titles, a VCD movie title summary table of all VCD movie titles stored in a computer, or file names of individual VCD movie titles. Such playback lists 60 must be classified by the universal remote controller 20 based on attributes of the individual broadcasting entries 601, where the broadcasting entry 601 of the same or similar attributes are classified into the same classification. For example, in the TV program broadcasting schedule provided by an XX cable service provider, the TV programs may be classified into different classifications based on the orientation of the programs into Western movie titles, Oriental Movies, Finance and Economics programs or News programs.

Furthermore, in the classifying step of Step (105), this step is able to perform classification based on the company titles of different cable service providers. Since the TV program broadcasting schedules vary among different cable service providers, the universal remote controller 20 of this invention is able to display the company title of the respective cable service provider on its display 209. The user may then select the desired cable service provider. By means of the selection of the cable service provider by the user, the universal remote controller 20 is able to precisely select the TV program broadcasting schedule of the described cable service provider, and then classify the programs to be broadcasted in each channel into different classifications based on the orientation of the programs into Western movie titles, Oriental Movies, Finance and Economics programs or News programs.

In Step (107), the universal remote controller 20 receives execution commands from an input device based on the classified playback list 70, and the universal remote controller transmitting wireless signal commands 205a corresponding to the execution commands to a second electronic device 40 based on the execution commands. In Step (107), the actual implementation of the input device may include plural pushbuttons 207 provided on the universal remote controller 20, or even a touch screen as the input device. Execution commands are generated upon pressing these pushbuttons 207 for manipulating the playback list 70, such as switching to the TV program broadcasted by a certain channel in the playback list 70, or configuring the schedule for recording a TV program broadcasted by a certain channel in the playback list 70 in real-time or advanced, or playing back a certain DVD movie title, a certain VCD movie title, or a certain soundtrack on an audio-CD disc, or the entire CD disc, or a certain MP3 on an MP3 disc, or the entire MP3 disc. Then, the universal remote controller 20 transmits wireless signal commands 205a corresponding to the execution commands to a second electronic device 40 based on the execution commands. Accordingly, after receiving the signal commands 205a, the second electronic device 40 would automatically initiate the above recording or playback operations.

The actual implementation of the first electronic device 30 of this invention may include a computer, a remote server, or a remote web site. The actual implementation of the second electronic device 40 may include a DVD/VCD/CD/MP3 player, a TV set, an audio appliance, a computer, a Karaoke player, and a set-top-box. Alternatively, the first electronic device 30 and the second electronic device 40 in this invention may be independent electronic devices, or of a single electronic device.

In Fig. 2, individual elements of the universal remote controller 20 of this invention are described as follows. A first communication interface device 203 serves to communicate with the first electronic device 30. The above communication link 50 is established by the first communication interface device 203 and first electronic device 30. A second communication interface device 205 serves to communication with the second electronic device 40. The above wireless signal commands 205a are transmitted to the second electronic device 40 through the second communication interface device 205. The actual implementation of the second communication interface device 205 may include an infrared wireless transmission circuit. The plural pushbuttons 207 serve to generate the pushbutton signal 207a. The execution command is realized by pushing the pushbuttons 207. The display 209 serves to display the control screen of the universal remote controller 20, through which control screen the user is able to clearly learn the current operation status or to input entries to the execution commands following the instructions provided by the control screen. A non-volatile memory 211 is electrically connected to a processor 201, and stores the classified playback list 70. The actual implementation of the non-volatile memory 211 may include flash memory.

In Fig. 2, the processor 201 is electrically connected to the first communication interface device 203, the second communication interface device 205, plural pushbuttons 207, display 209 and non-volatile memory 211. The processor 201 serves the following functions. The processor 201 serves to obtain the playback list 60 from the first electronic device 30 through the first communication interface device 203, wherein the playback list 60 includes at least one broadcasting entry 601. The processor 201 then classifies the playback list 60 based on attributes of individual broadcasting entries 601 and stores the classified playback list 70 to the non-volatile memory 211. The processor 201 then receives the pushbutton signals 207a, wherein the pushbutton signals 207a serve as execution commands of the classified playback list 70. The processor 201 then transmits wireless signal commands 205a corresponding to the pushbutton signals 207a to the second electronic device 40 based on the pushbutton signals 207a through the second communication interface device 205.

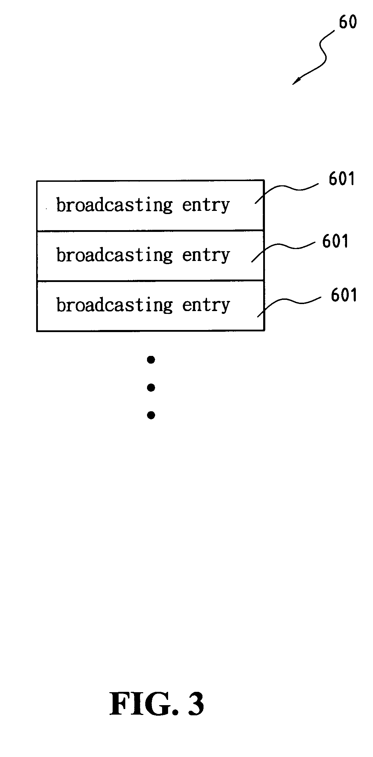

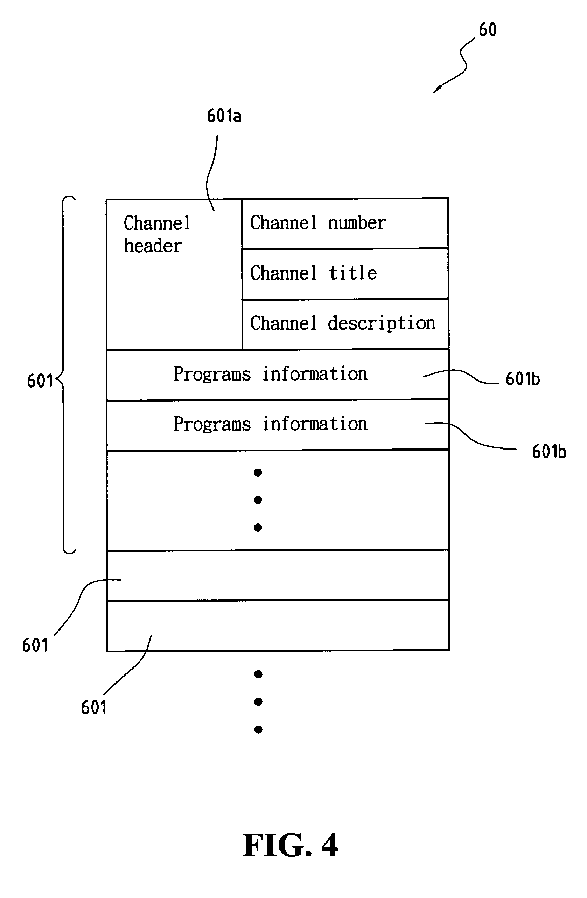

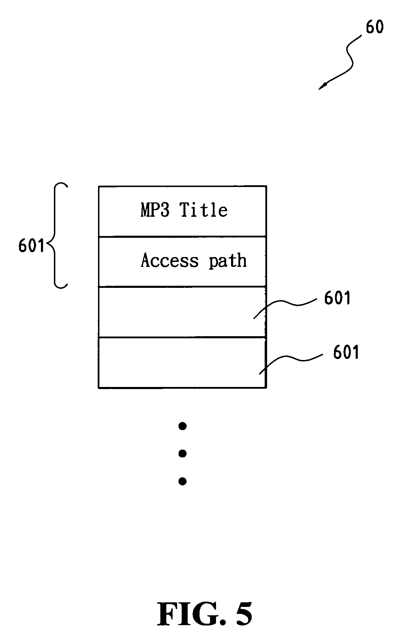

Fig. 3 is a schematic drawing illustrating a playback list obtained from a first electronic device according to this invention. Fig. 4 is a diagram illustrating the information structure of the TV program broadcasting schedule of the playback list obtained from the first electronic device. Fig. 5 is a diagram illustrating the information structure of the MP3 soundtrack summary table of the playback list obtained from the first electronic device. In Fig. 3, the playback list 60 includes plural broadcasting entries 601. The context of each broadcasting entry 601 differs due to the different variety of the playback list 60. In Fig. 4, each broadcasting entry 601 of the TV program broadcasting schedule 60 includes a channel header 601 a and plural programs information 601b, wherein the channel header 601a includes a channel number, a channel title and a channel description. The program information 601b memorizes the programs titles, starting time and ending time of all TV programs of the channel number. In Fig. 5, each broadcasting entry 601 of the MP3 soundtrack summary table 60 includes the title of and path for accessing each MP3 soundtrack, wherein the accessing path is mainly provided to the second electronic device 40, such that the second electronic device 40 is able to learn where to access the desired MP3 soundtrack.

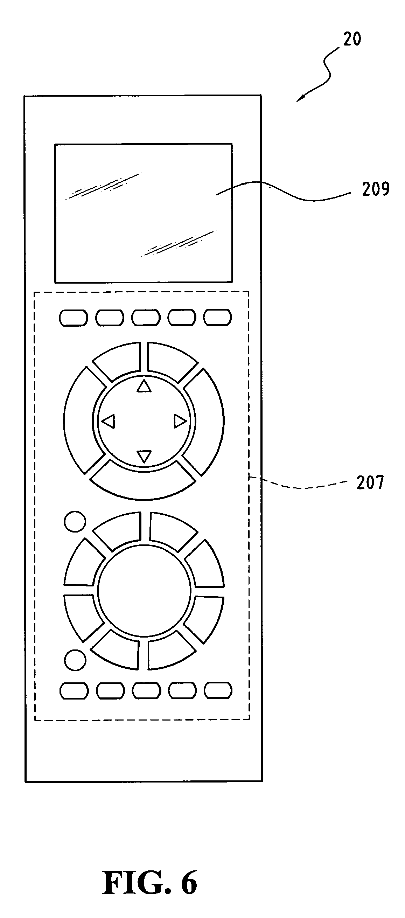

Fig. 6 is a schematic drawing illustrating the appearance of the universal remote controller of this invention. In Fig. 6, the plural pushbuttons 207 are provided to the universal remote controller 20. Furthermore, based on the programs that have been classified into different classifications based on the orientation of the programs into Western movie titles, Oriental Movies, Finance and Economics programs or News programs, the user is able to quickly select one of the programs classified into this category by selecting the pushbutton 207 labeled as "Western," "Oriental," "Finance and Economics," or "News."

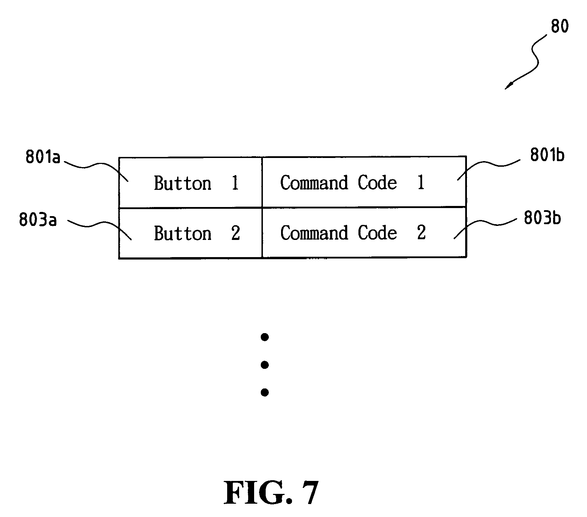

The number of playback lists 70 stored in the non-volatile memory 211 of this invention is not limited to one, such that the universal remote controller 20 is able to remotely control more than one second electronic device 40. Furthermore, the non-volatile memory 211 may store more than one command concordance table 80, where different command concordance tables 80 are adapted to second electronic devices 40 different brands or models. Fig. 7 is diagram illustrating the information structure of the command concordance table for use with a second electronic device. In Fig. 7, the plural pushbuttons 207 sequentially correspond to Field 801a, Field 803a... and the corresponding command codes are defined in Field 801b, Field 803b..., respectively. Accordingly, upon receiving the pushbutton signal 207a generated by the pushbuttons 207, the processor 201 would transmit wireless signal commands 205a corresponding to the second electronic device 40 to be remotely controlled through the second communication interface device 205 based on the command codes defined in the command concordance table 80.

This invention is related to a novel creation that makes a breakthrough in the art. Aforementioned explanations, however, are directed to the description of preferred embodiments according to this invention. Since this invention is not limited to the specific details described in connection with the preferred embodiments, changes and implementations to certain features of the preferred embodiments without altering the overall basic function of the invention are contemplated within the scope of the appended claims.

## Claims

1. A method of controlling a remote-controlled electronic device using a universal remote controller, comprising the steps of:
providing a universal remote controller;
establishing a communication link between the universal remote controller and a first electronic device, such that the universal remote controller is able to obtain a playback list from the first electronic device through the communication link, wherein the playback list includes at least one broadcasting entry;
the universal remote controller classifying the playback list based on attributes of individual broadcasting entries; and
the universal remote controller receiving execution commands from an input device based on the classified playback list, and the universal remote controller transmitting wireless signal commands corresponding to the execution commands to a second electronic device based on the execution commands.

2. The method of controlling of claim 1, wherein the first electronic device is selected from one of a computer, a remote server and a remote web site.

3. The method of controlling of claim 1, wherein the communication link is selected from one of a wired communication link, a wireless communication link, a WAN and a LAN.

4. The method of controlling of claim 1, wherein the wired communication link is a USB communication link.

5. The method of controlling of claim 1, wherein the playback list is selected from program broadcasting schedules provided by individual cable service providers, a Karaoke soundtrack summary table, a CD/MP3 soundtrack summary table, a DVD movie title summary table and a VCD movie title summary table.

6. The method of controlling of claim 1, wherein the second electronic device is selected from a DVD/VCD/CD/MP3 player, a TV set, an audio appliance, a computer, a Karaoke player, a set-top-box.

7. The method of controlling of claim 1, wherein the input device includes plural pushbuttons provided to the universal remote controller.

8. The method of controlling of claim 1, wherein the input device includes a touchscreen provided to the universal remote controller.

9. The method of controlling of claim 1, wherein the first electronic device and the second electronic device are of a single electronic device.

10. The method of controlling of claim 1, wherein the attribute is selected from one of the Western movie title, Oriental movie title, Finance and Economics program and News program.

11. The method of controlling of claim 1, wherein the attribute is a company title of a cable service provider.

12. A universal remote controller, comprising:
a first communication interface device, for communicating with a first electronic device;
a second communication interface device, for communicating with a second electronic device;
plural pushbuttons, for generating a pushbutton signal;
a display, for displaying the operation screen of the universal remote controller;
a processor, electrically connected to the first communication interface device, the second communication interface device, the plural pushbuttons and the display, and served to:
obtain a playback list from the first electronic device through the first communication interface device, wherein the playback list includes at least one broadcasting entry;
classify the playback list based on attributes of individual broadcasting entries; and
receive the pushbutton signals, wherein the pushbutton signals serve as execution commands of the classified playback list; and
transmit wireless signal commands corresponding to the pushbutton signals to a second electronic device based on the pushbutton signals;
a non-volatile memory, electrically connected to the processor and storing the classified playback list.

13. The universal remote controller of claim 12, wherein the first communication interface device is a USB communication interface device.

14. The universal remote controller of claim 12, wherein the first communication interface device is selected from one of a wired communication interface device and a wireless communication interface device.

15. The universal remote controller of claim 12, wherein the first electronic device is selected from one of a computer, a remote server and a remote web page.

16. The universal remote controller of claim 12, wherein the playback list, is selected from program broadcasting schedules provided by individual cable service providers, a Karaoke soundtrack summary table, a CD/MP3 soundtrack summary table, a DVD movie title summary table and a VCD movie title summary table.

17. The universal remote controller of claim 12, wherein the second electronic device is selected from a DVD/VCD/CD/MP3 player, a TV set, an audio appliance, a computer, a Karaoke player, a set-top-box.

18. The universal remote controller of claim 12, wherein the display is a touch screen.

19. The universal remote controller of claim 12, wherein the first electronic device and the second electronic device are of a single electronic device.

20. The universal remote controller of claim 12, wherein the attribute is selected from one of the Western movie titles, Oriental movie title, Finance and Economics program and News program.

21. The universal remote controller of claim 12, wherein the attribute is a company title of a cable service provider.
